# EUROPEAN PATENT APPLICATION

(11) **EP 2 830 246 A1**
(43) Date of publication of application: **28.01.2015**
(21) Application number: 13763481.2
(22) Date of filing: 11.03.2013
(51) Int. Cl.: H04J 99/00, H04B 7/04, H04J 1/00, H04J 11/00, H04W 16/28, H04W 72/04

(54) **RADIO TRANSMITTING APPARATUS, RADIO RECEIVING APPARATUS, RADIO COMMUNICATION SYSTEM, AND INTEGRATED CIRCUIT**

(30) Priority: 23.03.2012 JP 2012066867
(71) Applicant: Sharp Kabushiki Kaisha, Osaka-shi, Osaka 545-8522 (JP)
(72) Inventor: ONODERA, Takashi, Osaka 545-8522 (JP); TOMEBA, Hiromichi, Osaka 545-8522 (JP); RUIZ DELGADO, Alvaro, Osaka 545-8522 (JP); KUBOTA, Minoru, Osaka 545-8522 (JP)
(74) Representative: Müller - Hoffmann & Partner
(86) International application number: PCT/JP2013/056582
(87) International publication number: WO 2013/141055

(57) **Abstract**

A radio receiving apparatus is notified of whether a multi-user multiplexing transmission signal that is transmitted from a radio transmitting apparatus is the multi-user MIMO or the OFDMA without increasing a control information amount. A group forming section 107 that creates plural groups formed with the plural radio receiving apparatuses based on information indicating multiplexing methods to which the radio receiving apparatuses correspond, determines the multiplexing methods that multiplex data to be transmitted to the plural radio receiving apparatuses belonging to the groups with respect to the respective groups, and adds identification numbers that are beforehand determined corresponding to the multiplexing methods to the groups, a scheduling section 115 that selects any one of the groups, and a transmit symbol generating section 125 that generates a transmit signal by multiplexing data to be transmitted to the plural radio receiving apparatuses belonging to the selected group by the multiplexing method corresponding to the identification number added to the selected group are included.

## Description

### Technical Field

The present invention relates to a technology that performs user multiplexing on radio resources from a radio transmitting apparatus to a plurality of radio receiving apparatuses and simultaneously performs data transmission.

### Background Art

A need for a radio communication system with higher spectral efficiency has been increasing accompanying a recent increase in communication traffic. Various technologies that expect realization of that are suggested, and a technology that has possibility to increase spectral efficiency is orthogonal frequency division multiple access (OFDMA).

The OFDMA is a method that further increases substantial spectral efficiency by utilizing properties of orthogonal frequency division multiplexing (OFDM) in which a large number of orthogonal sub-carriers are densely disposed at intervals of the multiplicative inverse of a signal cycle and by allocating an arbitrary number of sub-carriers (or a frequency channel that is formed of a set of contiguous sub-carriers) with good performance to radio receiving apparatuses in accordance with receiving performance that differs among the radio receiving apparatuses under a multi-path environment.

The OFDMA is adopted as a down-link access method in an evolved universal terrestrial radio access (E-UTRA) system that is a cellular system where the third generation partnership project (3GPP) has mainly been standardized (NPL 1).

As another technology that improves spectral efficiency, multiple-input multiple-output (MIMO) transmission technology that uses a plurality of antennas for transmission and reception and spatially multiplexes a plurality of different data sequences (data streams) in the same frequency band to perform simultaneous communication has been in practical use for wireless LANs and cellular systems.

Further, in cellular systems, wireless LANs, and so forth of a next generation, a system has been suggested that has a significantly large number of transmit antennas included in a radio transmitting apparatus compared to the number of receive antennas included in a radio receiving apparatus. In such a system, multi-user MIMO has been suggested that performs MIMO-multiplexing of data sequences addressed to a plurality of radio receiving apparatuses (users) in order to further improve a system throughput by utilizing the transmit antennas of the radio transmitting apparatus (NPL 2). A method that performs MIMO-multiplexing of a plurality of data sequences addressed to a single radio receiving apparatus is referred to as single-user MIMO when compared to the multi-user MIMO.

On the other hand, as a method of identifying a plurality of radio receiving apparatuses that are destinations of data sequences spatially multiplexed in a multi-user MIMO signal that is transmitted from the radio transmitting apparatus, a method that determines combinations (groups) of the radio receiving apparatuses that are spatially multiplexed by the multi-user MIMO and embeds group IDs that identify each of the groups in control information of a transmit frame in multi-user MIMO transmission has been suggested in The Institute of Electrical and Electronics Engineers, Inc. (IEEE) 801.11ac of a wireless LAN standard that is being drawn up (NPL 3). Here, each of the radio receiving apparatuses may belong to a plurality of groups.

Prior to the multi-user MIMO transmission, the radio transmitting apparatus (access point) determines combinations (groups) of the radio receiving apparatuses that are spatially multiplexed by the multi-user MIMO, adds the group IDs that identify the groups to the groups, and notifies the radio receiving apparatuses of which groups the multi-user MIMO transmission is addressed to.

### Citation List

### Non Patent Literature

NPL 1: 3GPP, "LTE Physical Layer - General Description", TS 36.201 V8.3.0, March 2009
NPL 2: Spencer et al, "An Introduction to the Multi-User MIMO Downlink", IEEE Communication Magazine, Vol. 42, Issue 10, p.60-67, October 2004
NPL 3: "IEEE P802.11 Wireless LANs Specification Framework for TGac", IEEE 802.11-09/0992r21, January 2011

### Summary of Invention

### Technical Problem

However, in a case where one of the multi-user MIMO and the OFDMA is selected and used as a user multiplexing method in multi-user multiplexing transmission that performs simultaneous transmission to a plurality of radio receiving apparatuses, information that identifies the user multiplexing method is necessary. Further, allocation information of the radio receiving apparatuses to spatial streams in multi-user MIMO transmission and information for notifying the radio receiving apparatuses of allocation information of the radio receiving apparatuses to sub-carriers in OFDMA transmission are respectively necessary. This results in a problem that control information increases.

The present invention has been made in consideration of such a circumstance, and an object thereof is to provide a radio transmitting apparatus, a radio receiving apparatus, a radio communication system, and an integrated circuit that are capable of notifying the radio receiving apparatus of whether a multi-user multiplexing transmission signal that is transmitted from the radio transmitting apparatus is the multi-user MIMO or the OFDMA without increasing a control information amount in a radio communication system that selects and uses either one of the multi-user MIMO and the OFDMA as the user multiplexing method for each operation of the multi-user multiplexing transmission.

### Solution to Problem

(1) To achieve the object, measures described below are employed in the present invention. That is, a radio transmitting apparatus of the present invention is a radio transmitting apparatus that includes a plurality of transmit antennas, selects one of a plurality of multiplexing methods, and multiplexes and simultaneously transmits transmit data that are addressed to a plurality of radio receiving apparatuses, the radio transmitting apparatus including: a group forming section that creates a plurality of groups that are formed with the plurality of radio receiving apparatuses based on information that indicates the multiplexing methods to which the radio receiving apparatuses correspond, determines the multiplexing methods that multiplex data to be transmitted to the plurality of radio receiving apparatuses that belong to the groups with respect to the respective groups, and adds identification numbers that are in advance determined corresponding to the multiplexing methods to the groups; a scheduling section that selects any one group from the groups; and a transmit symbol generating section that generates a transmit signal by multiplexing data to be transmitted to the plurality of radio receiving apparatuses that belong to the selected group by the multiplexing method that corresponds to the identification number that is added to the selected group.
   As described above, the plurality of groups that are formed with the plurality of radio receiving apparatuses are created based on the information that indicates the multiplexing methods to which the radio receiving apparatuses correspond, the multiplexing methods that multiplex data to be transmitted to the plurality of radio receiving apparatuses that belong to the groups are determined with respect to the respective groups, the identification numbers that are in advance determined corresponding to the multiplexing methods are added to the groups, any one group is selected from the groups, and the transmit signal is generated by multiplexing the data to be transmitted to the plurality of radio receiving apparatuses that belong to the selected group by the multiplexing method that corresponds to the identification number that is added to the selected group. Thus, what kind of multiplexing method is used may be identified with the identification number of the group. Accordingly, the multiplexing method may be notified to the radio receiving apparatuses without increasing the control information amount.
(2) Further, the radio transmitting apparatus of the present invention includes: a group storing section that stores the created groups; a formation information generating section that generates group formation information of the groups; and a control information generating section that generates control information that contains the identification number of the selected group, in which the group formation information is transmitted to the radio receiving apparatuses, and the control information and the transmit signal in which the data to be transmitted to the plurality of radio receiving apparatuses are multiplexed are transmitted to the radio receiving apparatuses that belong to the selected group.
   As described above, the group formation information is transmitted to the radio receiving apparatuses, and the control information and the transmit signal in which the data to be transmitted to the plurality of radio receiving apparatuses are multiplexed are transmitted to the radio receiving apparatuses that belong to the selected group. Thus, what kind of multiplexing method is used to transmit a multiplexing transmission signal that is transmitted from the radio transmitting apparatus may be identified with the identification number. Accordingly, the multiplexing method may be notified to the radio receiving apparatuses without increasing the control information amount.
(3) Further, in the radio transmitting apparatus of the present invention, the group forming section determines orders in the groups of the radio receiving apparatuses that belong to the groups, the formation information generating section generates group formation information that contains information that indicates the orders of the radio receiving apparatuses in the groups, and the scheduling section determines radio resource allocation to the radio receiving apparatuses based on the order of the radio receiving apparatuses that belong to the selected group.
   As described above, the orders in the groups of the radio receiving apparatuses that belong to the groups are determined, the group formation information that contains the information that indicates the orders of the radio receiving apparatuses in the groups is generated, and the radio resource allocation to the radio receiving apparatuses is determined based on the order of the radio receiving apparatuses that belong to the selected group. Thus, the allocation in the multi-user MIMO transmission and the allocation in the OFDMA transmission may be notified to the radio receiving apparatuses without increasing the control information amount.
(4) Further, in the radio transmitting apparatus of the present invention, one of the plurality of multiplexing methods is orthogonal frequency division multiple access (OFDMA) that multiplexes the radio receiving apparatuses in a frequency direction, and the scheduling section determines sub-carrier allocation to the radio receiving apparatuses based on the order of the radio receiving apparatuses that belong to the selected group in a case where the multiplexing method that corresponds to the identification number added to the selected group is the OFDMA.
   As described above, the sub-carrier allocation to the radio receiving apparatuses is determined based on the order of the radio receiving apparatuses that belong to the selected group in a case where the multiplexing method that corresponds to the identification number added to the selected group is the OFDMA. Thus, the allocation in the OFDMA transmission may be notified to the radio receiving apparatuses without increasing the control information amount.
(5) Further, in the radio transmitting apparatus of the present invention, the plurality of multiplexing methods are multi-user multiple-input multiple-output (MIMO) that multiplexes the radio receiving apparatuses in a spatial direction and the orthogonal frequency division multiple access (OFDMA) that multiplexes the radio receiving apparatuses in the frequency direction.
   As described above, the plurality of multiplexing methods are the multi-user multiple-input multiple-output (MIMO) that multiplexes the radio receiving apparatuses in the spatial direction and the orthogonal frequency division multiple access (OFDMA) that multiplexes the radio receiving apparatuses in the frequency direction. Thus, whether the multiplexing transmission signal that is transmitted from the radio transmitting apparatus is the multi-user MIMO or the OFDMA may be identified with a group ID. Accordingly, the multiplexing method may be notified to the radio receiving apparatuses without increasing the control information amount.
(6) Further, a radio receiving apparatus of the present invention is a radio receiving apparatus that receives a signal in which transmit data addressed to a plurality of radio receiving apparatuses are multiplexed and which is simultaneously transmitted from a radio transmitting apparatus that includes a plurality of transmit antennas, the radio receiving apparatus including: a control information obtaining section that obtains control information that contains an identification number of a group from the received signal; a method determining section that determines whether or not the own apparatus belongs to the group that corresponds to the identification number; and a receive signal detecting section that performs a receiving process in response to the multiplexing method that is in advance determined corresponding to the identification number in a case where the own apparatus belongs to the group as a result of the determination.
   As described above, the control information that contains the identification number of the group is obtained from the received signal, whether or not the own apparatus belongs to the group that corresponds to the identification number is determined, and the receiving process in response to the multiplexing method that is in advance determined corresponding to the identification number is performed in a case where the own apparatus belongs to the group as a result of the determination. Thus, what kind of multiplexing method is used to transmit the multiplexing transmission signal that is transmitted from the radio transmitting apparatus may be identified with the identification number. As a result, the radio receiving apparatuses may receive a notification about the multiplexing method without increasing the control information amount.
(7) Further, the radio receiving apparatus of the present invention further includes: a formation information obtaining section that obtains group formation information of a group to which the radio receiving apparatus that is a transmission destination of the radio transmitting apparatus belongs; and a group storing section that stores information of the group.
   As described above, the group formation information of the group to which the radio receiving apparatus that is the transmission destination of the radio transmitting apparatus belongs is obtained, and the information of the group is stored. Thus, what kind of multiplexing method is used to transmit the multiplexing transmission signal that is transmitted from the radio transmitting apparatus may be identified with the identification number. As a result, the radio receiving apparatuses may receive a notification about the multiplexing method without increasing the control information amount.
(8) Further, in the radio receiving apparatus of the present invention, the multiplexing method is either one of multi-user multiple-input multiple-output (MIMO) that multiplexes the radio receiving apparatuses in a spatial direction and orthogonal frequency division multiple access (OFDMA) that multiplexes the radio receiving apparatuses in a frequency direction.
   As described above, the multiplexing method is either one of multi-user multiple-input multiple-output (MIMO) that multiplexes the radio receiving apparatuses in the spatial direction and the orthogonal frequency division multiple access (OFDMA) that multiplexes the radio receiving apparatuses in the frequency direction. Thus, whether the multiplexing transmission signal that is transmitted from the radio transmitting apparatus is the multi-user MIMO or the OFDMA may be identified with the group ID. As a result, the radio receiving apparatuses may receive a notification about the multiplexing method without increasing the control information amount.
(9) Further, in the radio receiving apparatus of the present invention, the receive signal detecting section identifies a radio resource allocation position with respect to the own apparatus based on an order of the own apparatus in the group and extracts the receive signal that is addressed to the own apparatus.
   As described above, the radio resource allocation position with respect to the own apparatus is identified based on the order of the own apparatus in the group, and the receive signal that is addressed to the own apparatus is extracted. Accordingly, the radio receiving apparatus may receive a notification about the allocation in the multi-user MIMO transmission and the allocation in the OFDMA transmission without increasing the control information amount.
(10) Further, a radio communication system of the present invention is configured with the radio transmitting apparatus according to any of (1) to (5) and the radio receiving apparatus according to any of (6) to (9).
   This configuration enables identification of whether the multiplexing transmission signal transmitted from the radio transmitting apparatus is the multi-user MIMO or the OFDMA with the identification number. The multiplexing method may be notified to the radio receiving apparatus without increasing the control information amount.
(11) Further, an integrated circuit of the present invention is an integrated circuit, which is implemented in a radio transmitting apparatus that includes a plurality of transmit antennas to allow the radio transmitting apparatus to execute a plurality of functions, in which the plurality of functions includes: a function of selecting one of a plurality of multiplexing methods, multiplexing transmit data that are addressed to a plurality of radio receiving apparatuses, and simultaneously transmitting the transmit data; a function of creating a plurality of groups that are formed with the plurality of radio receiving apparatuses based on information that indicates multiplexing methods to which the radio receiving apparatuses correspond, determining the multiplexing methods that multiplex data to be transmitted to the plurality of radio receiving apparatuses that belong to the groups with respect to the respective groups, and adding identification numbers that are in advance determined corresponding to the multiplexing methods to the groups; a function of selecting any one group from the groups; and a function of generating a transmit signal by multiplexing data to be transmitted to the plurality of radio receiving apparatuses that belong to the selected group by the multiplexing method that corresponds to the identification number that is added to the selected group.
   As described above, the plurality of groups that are formed with the plurality of radio receiving apparatuses are created based on the information that indicates the multiplexing methods to which the radio receiving apparatuses correspond, the multiplexing methods that multiplex data to be transmitted to the plurality of radio receiving apparatuses that belong to the groups are determined with respect to the respective groups, the identification numbers that are in advance determined corresponding to the multiplexing methods are added to the groups, any one group is selected from the groups, and the transmit signal is generated by multiplexing the data to be transmitted to the plurality of radio receiving apparatuses that belong to the selected group by the multiplexing method that corresponds to the identification number that is added to the selected group. Thus, what kind of multiplexing method is used may be identified with the identification number of the group. Accordingly, the multiplexing method may be notified to the radio receiving apparatuses without increasing the control information amount.
(12) Further, an integrated circuit of the present invention is an integrated circuit, which is implemented in a radio receiving apparatus to allow the radio receiving apparatus to execute a plurality of functions, in which the plurality of functions includes: a function of receiving a signal in which transmit data addressed to a plurality of radio receiving apparatuses are multiplexed and which is simultaneously transmitted from a radio transmitting apparatus that includes a plurality of transmit antennas; a function of obtaining control information that contains an identification number of a group from the received signal; a function of determining whether or not the own apparatus belongs to the group that corresponds to the identification number; and a function of performing a receiving process in response to the multiplexing method that is in advance determined corresponding to the identification number in a case where the own apparatus belongs to the group as a result of the determination.
   As described above, the control information that contains the identification number of the group is obtained from the received signal, whether or not the own apparatus belongs to the group that corresponds to the identification number is determined, and the receiving process in response to the multiplexing method that is in advance determined corresponding to the identification number is performed in a case where the own apparatus belongs to the group as a result of the determination. Thus, what kind of multiplexing method is used to transmit the multiplexing transmission signal that is transmitted from the radio transmitting apparatus may be identified with the identification number. As a result, the radio receiving apparatuses may receive a notification about the multiplexing method without increasing the control information amount.

### Advantageous Effects of Invention

The radio receiving apparatus may be notified of what kind of user multiplexing method is used to perform user multiplexing on a multi-user multiplexing transmission signal that is transmitted from a radio transmitting apparatus without increasing a control information amount in a radio communication system that selects and uses one of a plurality of user multiplexing methods for each operation of the multi-user multiplexing transmission.

### Brief Description of Drawings

[Fig. 1] Fig. 1 illustrates a schematic configuration example of a radio communication system of the present invention.
[Fig. 2] Fig. 2 is a function block diagram that illustrates a configuration example of a radio transmitting apparatus 1 of the present invention.
[Fig. 3] Fig. 3 illustrates an example of group information that is created by a group forming section 107 of the radio transmitting apparatus 1 of the present invention and is shared with radio receiving apparatuses 3.
[Fig. 4] Fig. 4 is a function block diagram that illustrates a configuration example of a transmit symbol generating section 125 according to this embodiment.
[Fig. 5A] Fig. 5A illustrates an example of allocation of modulation symbol sequences to users in a mapping section 201 of the present invention.
[Fig. 5B] Fig. 5B illustrates an example of allocation of the modulation symbol sequences to users in the mapping section 201 of the present invention.
[Fig. 6A] Fig. 6A illustrates an example of allocation of modulation symbol sequences of control information sequences, the modulation symbol sequences of the users, and reference signal sequences in the mapping section 201 of the present invention.
[Fig. 6B] Fig. 6B illustrates an example of allocation of the modulation symbol sequences of the control information sequences, the modulation symbol sequences of the users, and the reference signal sequences in the mapping section 201 of the present invention.
[Fig. 7] Fig. 7 is a function block diagram that illustrates a configuration example of a radio receiving apparatus 3 of the present invention.
[Fig. 8] Fig. 8 is a function block diagram that illustrates a configuration example of a receive signal detecting section 315 of the present invention.
[Fig. 9A] Fig. 9A illustrates an example of a sequence chart that illustrates an operation between the radio transmitting apparatus 1 and the radio receiving apparatuses 3 of the present invention.
[Fig. 9B] Fig. 9B illustrates an example of a sequence chart that illustrates an operation between the radio transmitting apparatus 1 and the radio receiving apparatuses 3 of the present invention.

### Description of Embodiments

A description will hereinafter be made about a communication technology according to an embodiment of the present invention with reference to drawings. The communication technology according to this embodiment is a technology_that is used in a radio communication system in which a radio transmitting apparatus (a base station apparatus, an access point, or the like) selects a plurality of radio receiving apparatuses from a plurality of radio receiving apparatuses (terminal apparatuses) and performs multi-user multiplexing in a spatial direction or a frequency direction on transmit data that are addressed to the plurality of radio receiving apparatuses, and thereby performs simultaneous transmission. In this embodiment, a description will be made with an example of a communication system where multi-user MIMO is used as a user multiplexing method in the spatial direction and OFDMA is used as a user multiplexing method in the frequency direction in the above multi-user multiplexing transmission.

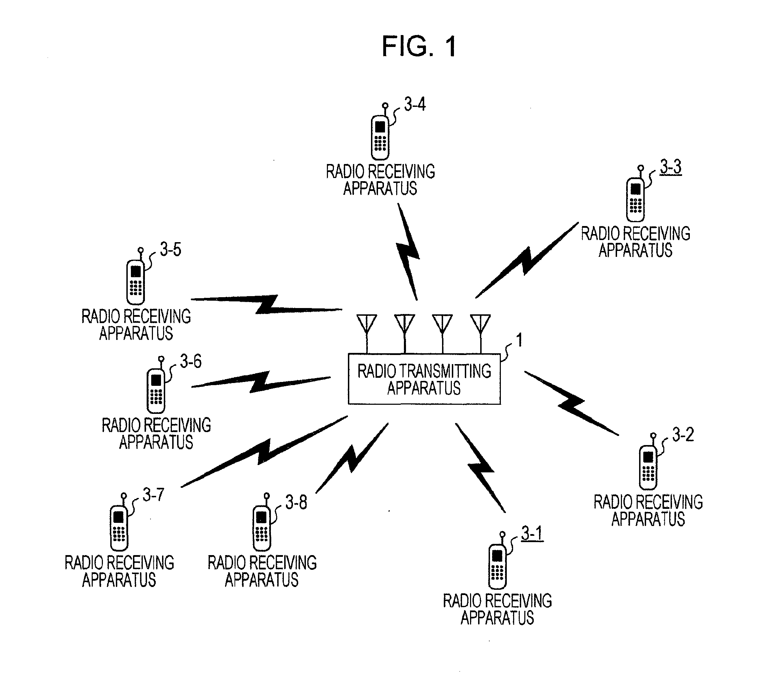

Fig. 1 illustrates a schematic configuration example of a radio communication system of the present invention. As illustrated in Fig. 1, in the communication system in this embodiment, when the radio transmitting apparatus 1 communicates with a plurality of radio receiving apparatuses (for example, radio receiving apparatuses 3-1 to 3-8; the radio receiving apparatuses 3-1 to 3-8 are also collectively referred to as radio receiving apparatuses 3), the radio transmitting apparatus 1 creates a plurality of groups with a plurality of combinations of those radio receiving apparatuses 3 and adds group identification numbers (group IDs) that identify the groups. The single radio receiving apparatus 3 may belong to a plurality of groups.

In this embodiment, a user multiplexing method that is used for multi-user multiplexing transmission is in advance determined for each of the group IDs. In other words, a plurality of candidates of the group IDs that correspond to the user multiplexing method used for the multi-user multiplexing transmission (specifically, a plurality of candidates that are distinct with respect to ranges of values, bit patterns, or the like of the group IDs, for example) are in advance determined, one mutually different candidate is selected from the candidates of the group IDs that correspond to the user multiplexing method that is used in each of the created groups, and the selected candidates are added to the groups as the respective group IDs. When the group IDs are expressed by six bits (No. 0 to No. 63), group IDs up to No. 31 are in advance determined as a group (first group) that uses the multi-user MIMO, and group IDs from No. 32 are determined as a group (second group) that uses the OFDMA, for example. The distinction between the group IDs of the first group and the group IDs of the second group may be made by using a method that splits an available range of the group IDs into two parts as described above. Alternatively, a method may be used that splits the group IDs by a specified bit value in a case where the group IDs are expressed by binary numbers (for example, the group ID belongs to the first group when the specified bit value is zero and to the second group when the specified bit value is one). Other than that, any method may be used that allows distinction of which group the group ID belongs to only by the group ID.

The radio transmitting apparatus 1 notifies the radio receiving apparatuses 3 of information of above grouping (information of which groups the radio receiving apparatuses 3 belong to) and information that determines a processing order of the belonging radio receiving apparatuses in each of the groups (orders of channel state information notifications, ACK/NAK responses, and so forth in a multi-user multiplexing transmission process, an order of individual pieces of information that are addressed to radio receiving apparatuses 3 in a control signal, an order of spatial streams or allocated sub-carriers, or the like).

The radio transmitting apparatus 1 selects one group from the plurality of created groups that are candidates of the combinations as the combinations of the radio receiving apparatuses 3 that are targets of the multi-user multiplexing transmission (target radio receiving apparatuses) and transmits transmit data addressed to the plurality of radio receiving apparatuses 3 that belong to the selected group by multi-user MIMO transmission in which simultaneous communication is performed by spatially multiplexing the users in the same frequency band or by OFDMA transmission in which simultaneous communication is performed by dividing all sub-carriers of OFDM into a plurality of groups or blocks, allocating the groups or blocks to the radio receiving apparatuses 3, and multiplexing the users with respect to frequencies, in accordance with the user multiplexing method that corresponds to the selected group. Here, the groups that are the targets of the multi-user multiplexing transmission are notified to the radio receiving apparatuses 3 by using the group IDs that identify the selected group. At the same time, the radio receiving apparatuses 3 may identify the user multiplexing method that is used by the radio transmitting apparatus 1 with the notification of the group IDs.

The radio receiving apparatuses 3-1 to 3-8 receive a reference signal (a known signal in transmitter and receiver such as a pilot signal or a training signal) from the radio transmitting apparatus 1, estimate channel states between the transmit antennas of the radio transmitting apparatus 1 and receive antennas of the own radio receiving apparatuses 3 or channel states between the transmit antennas and the receive antennas of the own radio receiving apparatuses 3 about the spatial streams that are transmitted by the radio transmitting apparatus 1, and each report channel state information that indicates the channel states to the radio transmitting apparatus 1. The radio transmitting apparatus 1 selects one group from the plurality of groups based on the channel state information or the like that is reported from the radio receiving apparatuses 3 and transmits transmit data addressed to the plurality of radio receiving apparatuses 3 by selecting one of the multi-user MIMO transmission in which simultaneous communication is performed by spatial multiplexing and the OFDMA transmission in which simultaneous communication is performed by multiplexing with respect to frequencies.

For example, the radio transmitting apparatus 1 receives from the radio receiving apparatuses 3 a signal to noise power ratio (SNR), a signal to interference plus noise power ratio (SINR), a carrier to noise power ratio (CNR), a carrier to interference plus noise power ratio (CINR), or a channel quality indicator (CQI) that indicates a value calculated from those, channel state information (CSI) that indicates a complex channel gain from the transmit antennas of the radio transmitting apparatus 1 to the receive antennas of the radio receiving apparatuses 3, a covariance value of that, or the like, a precoding matrix that is obtained from the channel states or a precoding matrix index (PMI) of a desired precoding matrix, and so forth, and selects the group of the radio receiving apparatuses 3 to which the multi-user multiplexing transmission is performed based on those pieces of information.

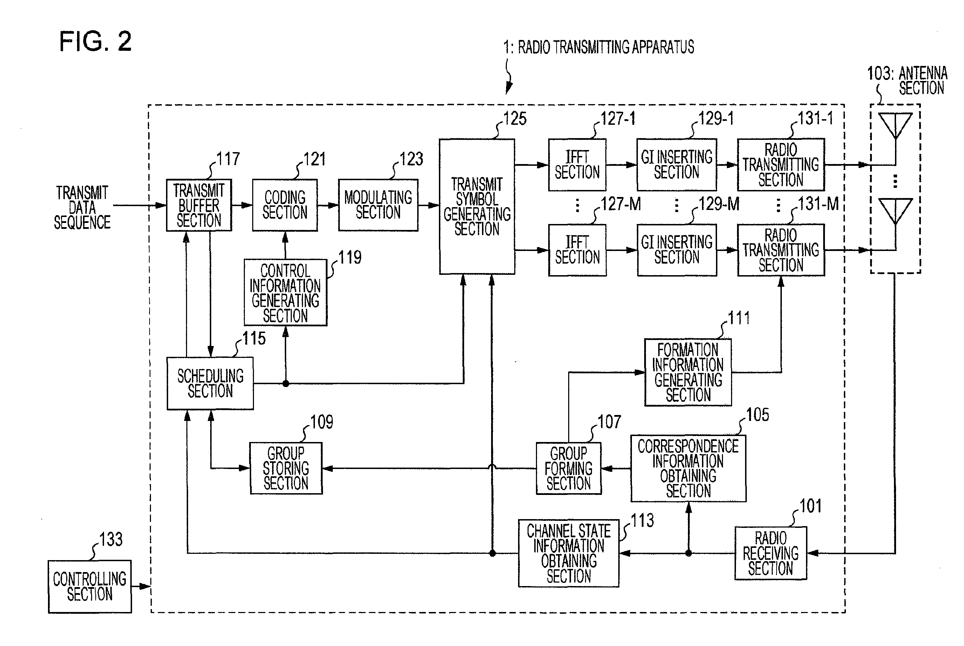

Fig. 2 is a function block diagram that illustrates a configuration example of the radio transmitting apparatus 1 of the present invention. The configuration example of the radio transmitting apparatus 1 in Fig. 2 includes M antennas and may perform MIMO transmission while spatially multiplexing a maximum of M different transmit data sequences. A radio receiving section 101 receives signals that are transmitted from the radio receiving apparatuses 3 (the radio receiving apparatuses 3-1 to 3-8) through at least one antenna of an antenna section 103. A correspondence information obtaining section 105 obtains correspondence information that is received from the radio receiving apparatuses 3 with which communication is established for the first time and from the radio receiving apparatuses 3 or the like when the grouping is updated and that indicates information of the user multiplexing methods to which the radio receiving apparatuses 3 correspond or information which allows distinction of the corresponding user multiplexing methods (receiving function information or the like that indicates a terminal class, compliance standard information, and so forth). The correspondence information obtaining section 105 outputs corresponding user multiplexing method information of the radio receiving apparatuses 3.

In this embodiment, as an example, the communication system in Fig. 1 has the radio receiving apparatuses 3-1 and 3-3 serving as the radio receiving apparatuses 3 that correspond only to the multi-user MIMO transmission (hereinafter referred to as a first kind of radio receiving apparatuses 3) and the radio receiving apparatuses 3-2, 3-4, 3-5, 3-6, 3-7, and 3-8 serving as the radio receiving apparatuses 3 that correspond to both of the multi-user MIMO transmission and the OFDMA transmission (hereinafter referred to as a second kind of radio receiving apparatuses 3). For example, the first kind of radio receiving apparatuses 3 are terminal apparatuses that correspond to multi-user MIMO transmission in related art, and the second kind of radio receiving apparatuses 3 are terminal apparatuses or the like that retain backward compatibility and correspond to the OFDMA transmission.

A group forming section 107 creates a plurality of groups by a plurality of combinations of the radio receiving apparatuses 3 based on at least the corresponding user multiplexing method information of the radio receiving apparatuses 3 that is output by the correspondence information obtaining section 105, determines the user multiplexing methods to be used for the groups, and adds the group IDs that correspond to the determined user multiplexing methods. For example, in the above-described example of the group IDs of six bits, the group IDs up to No. 31 are added to the first group that use the multi-user MIMO transmission, and the group IDs from No. 32 are added to the second group that use the OFDMA transmission.

Then, an order of the radio receiving apparatuses 3 in each of the groups (orders of the channel state information notifications, the ACK/NAK responses, and so forth in the multi-user multiplexing transmission process, the order of individual pieces of information that are addressed to the radio receiving apparatuses 3 in the control signal, the order of the spatial streams or allocated sub-carriers, or the like) is also determined.

The single radio receiving apparatus 3 may belong to a plurality of groups. Further, the radio receiving apparatus 3 that does not belong to any group may be present. However, the group is created so that the first kind of radio receiving apparatuses 3 that correspond only to the multi-user MIMO transmission belong only to the first group.

The second kind of radio receiving apparatuses 3 that correspond to both of the multi-user MIMO transmission and the OFDMA transmission may belong to both of the first group and the second group. Further, the grouping may be performed by further using information such as positional information of the radio receiving apparatuses 3 or estimation results of arrival angles of electric waves from the radio receiving apparatuses 3. In this case, for example, it is preferable to create the group in which the multi-user MIMO transmission is performed between the radio receiving apparatuses 3 that are in distant positions or between the radio receiving apparatuses 3 that have diverse electric wave arrival angles so that the correlation between the channels becomes low and to create the group in which the OFDMA transmission is performed between the radio receiving apparatuses 3 in close positions and between the radio receiving apparatuses 3 having close electric wave arrival angles that may provide a higher correlation between the channels. However, an embodiment is not limited to this.

Further, a plurality of groups may be present in which the combinations of the radio receiving apparatuses 3 are the same but the user multiplexing methods or the orders of the radio receiving apparatuses 3 are different. In such a case where the plurality of groups are created in which the combinations of the radio receiving apparatuses 3 are the same but the user multiplexing methods or the orders of the radio receiving apparatuses 3 are different, selection of the group that is defined by the user multiplexing method or the order with higher efficiency (a high transmission rate in each of the radio receiving apparatuses 3, a high total transmission rate, low interferences with other cells, or the like) is enabled in accordance with the channel states or the like of the combined radio receiving apparatuses 3.

Further, in the group whose user multiplexing method is the OFDMA, it is preferable to determine sub-carriers, blocks in which a plurality of contiguous sub-carriers are combined, or sub-carrier groups in which a plurality of non-contiguous sub-carriers are combined, the sub-carriers, the blocks, the sub-carrier groups to which the radio receiving apparatuses 3 are allocated, while associating those with the order of the radio receiving apparatuses 3 in each of the above groups. For example, when four radio receiving apparatuses 3 belong to the group, a rule is determined such that all the sub-carriers (or a band to be used for the multi-user multiplexing transmission) are equivalently divided into four sub-carrier blocks and the sub-carrier blocks with the lower frequencies are sequentially allocated to the prior radio receiving apparatuses 3 in the order. Further, for example, when the group to which the four radio receiving apparatuses 3 belong is selected but data transmission is not performed to one of the radio receiving apparatuses 3 (for example, when zero is specified as a spatial stream number), a blank (or dummy data transmission) may be allocated to the sub-carrier block that corresponds to the concerned radio receiving apparatus 3 among the four sub-carrier blocks. Alternatively, the three sub-carrier blocks are equivalently divided and allocated to the remaining three radio receiving apparatuses 3. It is preferable to in advance determine an allocation rule in such a case.

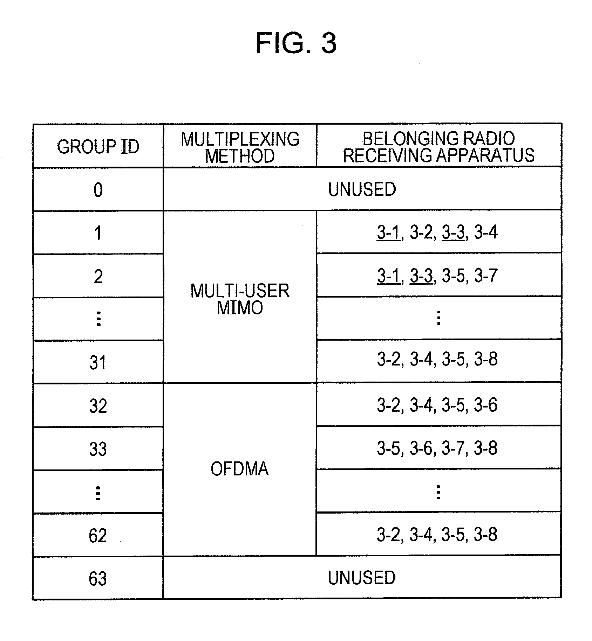

Fig. 3 illustrates an example of group information that is created by the group forming section 107 of the radio transmitting apparatus 1 of the present invention and is shared with radio receiving apparatuses 3. Fig. 3 illustrates an example where the group IDs are expressed by six bits (No. 0 to No. 63), the group IDs up to No. 31 are determined as the first group that uses the multi-user MIMO as the user multiplexing method and the group IDs from No. 32 are determined as the second group that uses the OFDMA as the user multiplexing method. In the illustrated example, the group IDs No. 0 and No. 63 are not used as the groups for the user multiplexing methods in consideration of a case where those numbers are used as numbers that represent particular purposes (for example, single-user MIMO in which an entire band is addressed to a single user, a state before the groups are defined, and so forth).

A first group that contains the group IDs from No. 1 to No. 31 and uses the multi-user MIMO as the user multiplexing method and a second group that contains the group IDs from No. 32 to No. 62 and uses the OFDMA are defined with respect to the radio receiving apparatuses 3-1 to 3-8.

The radio receiving apparatuses 3-1 and 3-3 (the radio receiving apparatuses 3 with underlines in Fig. 3) that are the first kind of radio receiving apparatuses 3 corresponding only to the multi-user MIMO (not corresponding to the OFDMA) belong only to the first group. The radio receiving apparatuses 3-2, 3-4, 3-5, 3-6, 3-7, and 3-8 that are the second kind of radio receiving apparatuses 3 corresponding to both of the multi-user MIMO and the OFDMA may belong to both of the first and second groups.

Returning to Fig. 2, a group storing section 109 stores information of the groups that are created by the group forming section 107 (group formation information that contains the group IDs, the belonging radio receiving apparatuses 3, the orders of the radio receiving apparatuses 3 in the groups). A formation information generating section 111 generates the group formation information for notifying the radio receiving apparatuses 3 of the information of the groups that are created by the group forming section 107. The notification of the group formation information to the radio receiving apparatuses 3 may notify each of the groups of information of the belonging radio receiving apparatuses 3 (identification information of the radio receiving apparatuses 3, that is, user IDs, MAC addresses, or the like) and the order or may notify each of the radio receiving apparatuses 3 of information of the group to which the radio receiving apparatus 3 belongs to and the order in the group. A channel state information obtaining section 113 obtains channel state information that contains information of CQI and CSI and is transmitted by each of the radio receiving apparatuses 3-1 and 3-8 from received signals.

A scheduling section 115 selects one set of a combination of the plurality of radio receiving apparatuses 3 to which the multi-user multiplexing transmission is performed (target radio receiving apparatuses) and the user multiplexing method from the plurality of groups that are stored in the group storing section 109 based on transmit data amounts addressed to the radio receiving apparatuses 3 and priority that are accumulated in a transmit buffer section 117, the channel state information of the radio receiving apparatuses 3 that are obtained by the channel state information obtaining section 113, and so forth. The scheduling section 115 determines allocation of a spatial resources of the multi-user MIMO to the target radio receiving apparatuses and allocation of the sub-carriers (blocks) of the OFDMA to the target radio receiving apparatuses based on the user multiplexing method and the processing order that correspond to the group ID of the selected group and outputs scheduling information that indicates the user multiplexing method, a result of the allocation of the spatial resources of the multi-user MIMO, or a result of the allocation of the sub-carriers of the OFDMA.

Further, parameters such as modulation and coding scheme (MCS) with respect to the transmit data addressed to the radio receiving apparatuses 3 may be selected based on the CQI or the like from the radio receiving apparatuses 3 that are obtained by the channel state information obtaining section 113.

In this embodiment, a description will be made about a case where a group to which U radio receiving apparatuses 3 among the radio receiving apparatuses 3-1 to 3-8 belong is selected and a single transmit data sequence is transmitted to each of the target radio receiving apparatuses. The above selected U target radio receiving apparatuses will hereinafter be denoted as first to Uth users.

Further, a description will be made with an example as follows: In the multi-user MIMO transmission, a single transmit data sequence is allocated to a single spatial stream for each of the users, and U streams as a total are spatially multiplexed by the multi-user MIMO and transmitted. In the OFDMA transmission, a single transmit data sequence for each of the users is spatially multiplexed by the single-user MIMO with U streams by the sub-carrier (block) that is allocated to each of the users, and transmitted. In addition, the user number U is equivalent to a number M of the antennas of the antenna section 103. However, an embodiment is not limited to this.

The control information generating section 119 generates control information sequences that contain information of the group ID (group identification information), MCSs of the users, the spatial stream numbers of the users based on the scheduling information. The transmit buffer section 117 accumulates the transmit data sequences that are input from a higher layer and addressed to the radio receiving apparatuses 3 and sequentially outputs the transmit data sequences that are selected by the scheduling section 115 and addressed to the first to the Uth users to a coding section 121.

The coding section 121 performs error correction coding on each of the transmit data sequences that are input from the transmit buffer section 117 and addressed to the first to the Uth users and the control information sequences that are generated by the control information generating section 119. When a coding rate of the transmit data sequences that are addressed to the users is selected in the scheduling section 115, rate matching (puncturing) is performed in accordance with the coding rate. When the coding rate is not specified, it is preferable to perform the rate matching on the control information sequences at a coding rate that is in advance determined. Further, a plurality of coding sections 121 may be provided and configured to perform parallel error correction coding on the transmit data sequences that are addressed to the U users.

A modulating section 123 modulates the transmit data sequences addressed to the first to the Uth users and the control information sequences to which the error correction coding is applied and outputs a modulation symbol sequence of each of the sub-carriers. When a modulation scheme of the transmit data that are addressed to the users is selected in the scheduling section 115, modulation is performed by using the modulation scheme. When the modulation scheme is not specified, it is preferable to perform the modulation on the control information sequences by a modulation scheme that is in advance determined. Further, a plurality of modulating sections 123 may be provided and configured to perform parallel modulation on the transmit data sequences addressed to the U users to which the error correction coding is applied.

The modulation symbol sequences of the control information sequences, the modulation symbol sequences that are addressed to the first to the Uth users, the scheduling information (the user multiplexing method that corresponds to the group ID of the selected group, a result of the allocation of the spatial resources of the multi-user MIMO, a result of the allocation of the sub-carriers of the OFDMA, or the like), and the channel state information from each of the users that is obtained by the channel state information obtaining section 113 are input to a transmit symbol generating section 125. The transmit symbol generating section 125 allocates the modulation symbol sequences of the control information, the modulation symbol sequences addressed to the first to the Uth users, and a reference signal symbol sequence to the spatial resources and the sub-carriers and generates transmit symbol sequences of the sub-carriers for respective signals that are transmitted from the M antennas of the antenna section 103. The transmit symbol generating section 125 will be described later in detail.

IFFT sections 127-1 to 127-M apply frequency-time conversion such as inverse fast Fourier transform (IFFT) to the transmit symbol sequences of the M antennas that are generated by the transmit symbol generating section 125 and convert the transmit symbol sequences into signals in a time domain. GI inserting sections 129-1 to 129-M insert guard intervals (GI) in the time domain signals of the antennas. Radio transmitting sections 131-1 to 131-M transmit the time domain signals with the inserted GIs through the antennas of the antenna section 103.

Group identification information for notifying the first to the Uth users (the target radio receiving apparatuses) of group IDs for identifying the selected group may be generated as a separate frame from a frame (packet) for transmitting the transmit data sequences and may be transmitted to the users prior to transmission of the transmit data sequences. A controlling section 133 controls each of the above sections and makes the sections execute their processes.

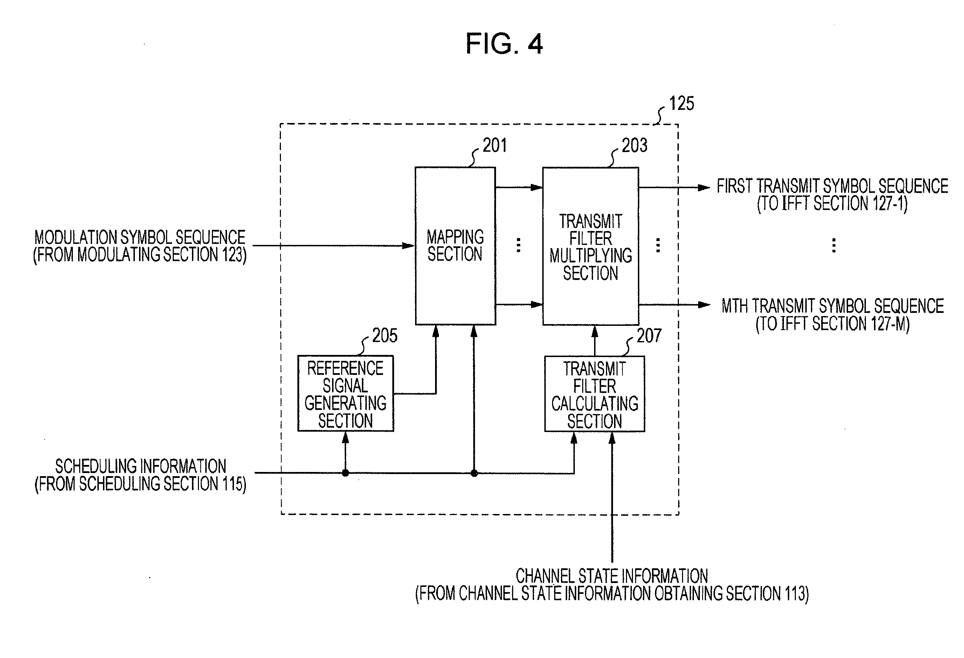

Fig. 4 is a function block diagram that illustrates a configuration example of the transmit symbol generating section 125 according to this embodiment. The transmit symbol generating section 125 has a mapping section 201, a transmit filter multiplying section 203, a reference signal generating section 205, and a transmit filter calculating section 207. The reference signal generating section 205 generates known reference signal sequences (first reference signal sequences) that are necessary for a reception synchronization process and a receiving process of signals to be in common received by all the users (for example, control signals that are common to all the users such as group IDs) and generates known reference signal sequences (second reference signal sequences) for estimating the channel states of the selected users with respect to the spatial streams of the users based on the scheduling information.

The modulation symbol sequences of the control information sequences, the modulation symbol sequences addressed to the first to the Uth users, the reference signal sequences that are generated by the reference signal generating section 205 are input to the mapping section 201. The mapping section 201 allocates the modulation symbol sequences and the reference signal sequences to radio resources that are formed of the sub-carriers (in the frequency direction) of the spatial streams (in the spatial direction) and OFDM symbols (in a time direction) based on a scheduling result by the scheduling section 115. The second reference signal sequences are preferably allocated to be orthogonal in the frequency direction, the time direction, or both of those such that the reference signals that correspond to the spatial streams of the users may be separated and identified when the reference signals are received. Further, allocation of the modulation symbol of the control information sequences may vary with respect to the control information such as the group ID and the spatial stream numbers of the users that are necessary for MIMO reception and common to all the users and individual pieces of the control information such as the MCSs of the users.

When a sounding signal (sounding frame, sounding packet, or null data packet) that is configured with the reference signal and the control signal and does not contain the transmit data sequence is transmitted for the purpose of making the radio receiving apparatuses 3 estimate the channels, the reference signal sequences that correspond to the spatial streams are similarly allocated to be orthogonal to each other.

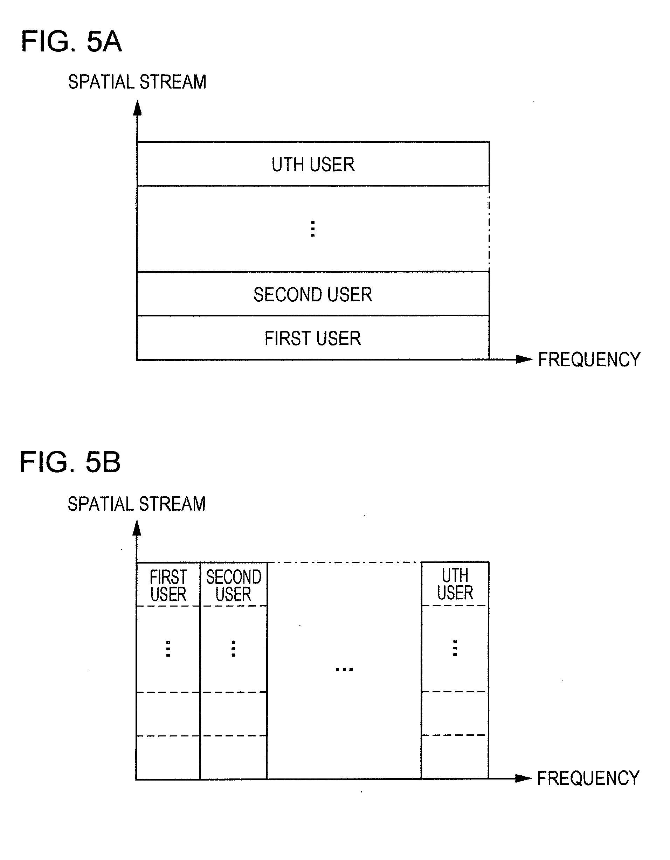

Figs. 5A and 5B illustrate examples of allocation of the modulation symbol sequences of the users in the mapping section 201 of the present invention. Fig. 5A illustrates an example of allocation of the modulation symbol sequences of the users in a case where the multi-user MIMO is selected as the user multiplexing method. The multi-user multiplexing is performed by allocating the modulation symbol sequences that are addressed to the users to the spatial streams. Fig. 5B illustrates an example of allocation of the modulation symbol sequences of the users in a case where the OFDMA is selected as the user multiplexing method. The multi-user multiplexing is performed by dividing the sub-carriers of the OFDM into U blocks and allocating the modulation symbol sequences that are addressed to the users to the blocks. Fig. 5B illustrates the example where the single-user MIMO transmission is performed by further using a plurality of spatial streams with respect to each of the users. However, an embodiment is not limited to this, but transmission by a single spatial stream may be performed.

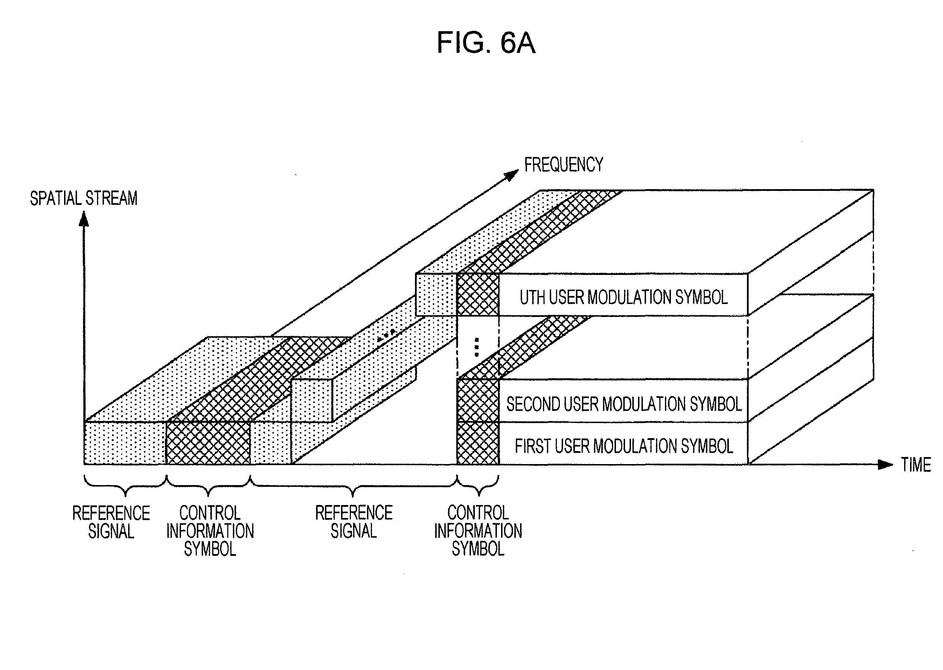

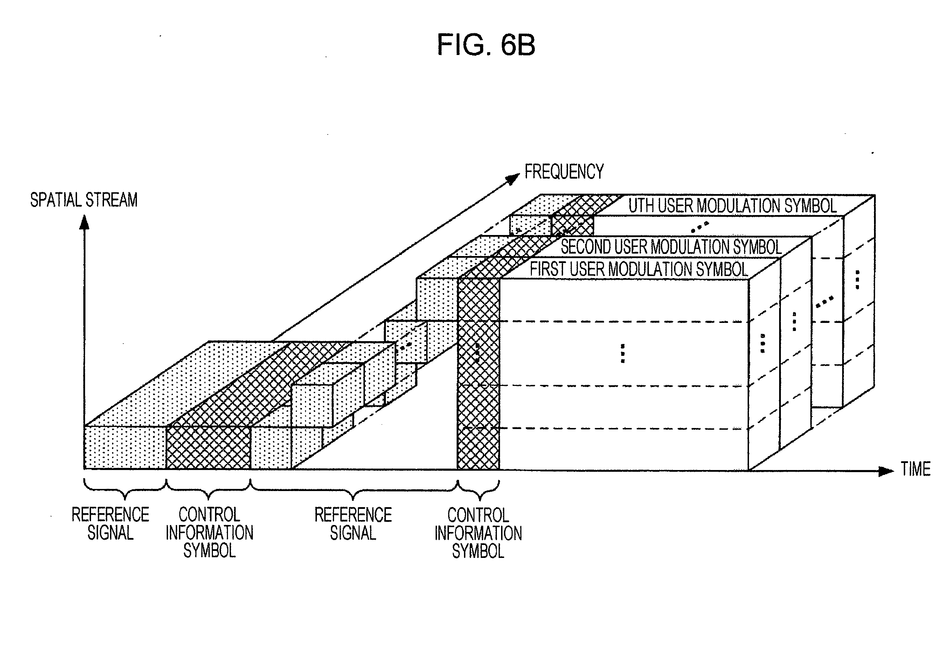

Figs. 6A and 6B illustrates examples of allocation of the modulation symbol sequences of the control information sequences, the modulation symbol sequences of the users, and the reference signal sequences in the mapping section 201 of the present invention. Fig. 6A illustrates the example where the multi-user MIMO is selected as the user multiplexing method. First, the first reference signal sequences and the modulation symbol sequences of the control information that is common to all the users are sequentially allocated by using all the sub-carriers without spatial multiplexing. Next, the second reference signal sequences are allocated to be mutually orthogonal among the spatial streams in a time division multiplexing manner. Further, the modulation symbol sequences of the control information of the individual users are allocated to the spatial streams of the respective users. Thereafter, the modulation symbol sequences addressed to the users are allocated to the respective spatial streams of the users. The multi-user multiplexing is thereby performed.

Fig. 6B illustrates the example of allocation where the OFDMA is selected as the user multiplexing method. First, the first reference signal sequences and the modulation symbol sequences of the control information that is common to all the users are sequentially allocated by using all the sub-carriers without spatial multiplexing. Next, the sub-carriers of the OFDM are divided into the U blocks, and the second reference signal sequences are allocated to be mutually orthogonal among the spatial streams in a time division multiplexing manner for each of sub-carrier blocks that are allocated to the respective users. Further, the modulation symbol sequences of the control information of the individual users are allocated to the sub-carrier blocks of the respective users. Thereafter, the modulation symbol sequences addressed to the users are allocated to the respective sub-carrier blocks. The multi-user multiplexing is thereby performed.

Returning to Fig. 4, the transmit filter calculating section 207 obtains the channel state information about the selected users that is input from the channel state information obtaining section 113 based on the scheduling information and calculates a transmit filter Wₜ based on the channel state information.

For example, when the multi-user MIMO is selected and column vectors hₐ₁ to h_{aU} that have the complex channel gains between the single receive antennas of the radio receiving apparatuses 3 and the M (= U) transmit antennas of the own radio transmitting apparatus 1 as components are input as the channel state information about the U users, a filter that reduces interferences among the users such as a zero forcing criterion Wₜ = Hₐ⁻¹ (the inverse matrix of Hₐ) or a minimum mean square error (MMSE) criterion Wₜ = Hₐ^{H} (HₐHₐ^{H} + αI)⁻¹ (I represents an identity matrix, α represents a normalization factor, and a superscript ^{H} represents the Hermitian transposition) is calculated as the transmit filter Wₜ from a channel matrix that has U rows and M columns Hₐ = [hₐ₁ ... h_{aU}]^{T} (a superscript ^{T} represents a transposition). Further, for example, when the OFDMA is selected and the single user MIMO transmission is performed, a matrix that has N rows and M columns and in which a component w_{i,j} satisfies w_{i,j} = 1 (i = j) and w_{i,j} = 0 (i ≠ j) may be calculated as the transmit filter Wₜ for N receive antennas of the radio receiving apparatuses 3 and the M transmit antennas of the own radio transmitting apparatus 1. Further, as another example in a case where the OFDMA is selected, when V is input that is obtained by performing singular value decomposition (H_{b} = U∑V^{H}, U: a left singular value matrix, ∑: a diagonal matrix that has singular values as components, and V: a right singular value matrix) of a channel matrix H_{b} with N rows and M columns and having the complex channel gains among the N receive antennas of the radio receiving apparatuses 3 and the M transmit antennas of the own radio transmitting apparatus 1 as components, as the channel state information about the radio receiving apparatuses 3, V may be calculated as the transmit filter Wₜ.

The transmit filter multiplying section 203 multiplies the symbols of the sub-carriers of the spatial streams that are output from the mapping section 201 by the transmit filter Wₜ that is calculated by the transmit filter calculating section 207 and generates M transmit symbol sequences as first to Mth transmit symbol sequences to be transmitted from the M antennas of the antenna section 103. The first reference signal sequences and the modulation symbol sequences of the control information that are common to all the users are transmitted without multiplication by the transmit filter Wₜ.

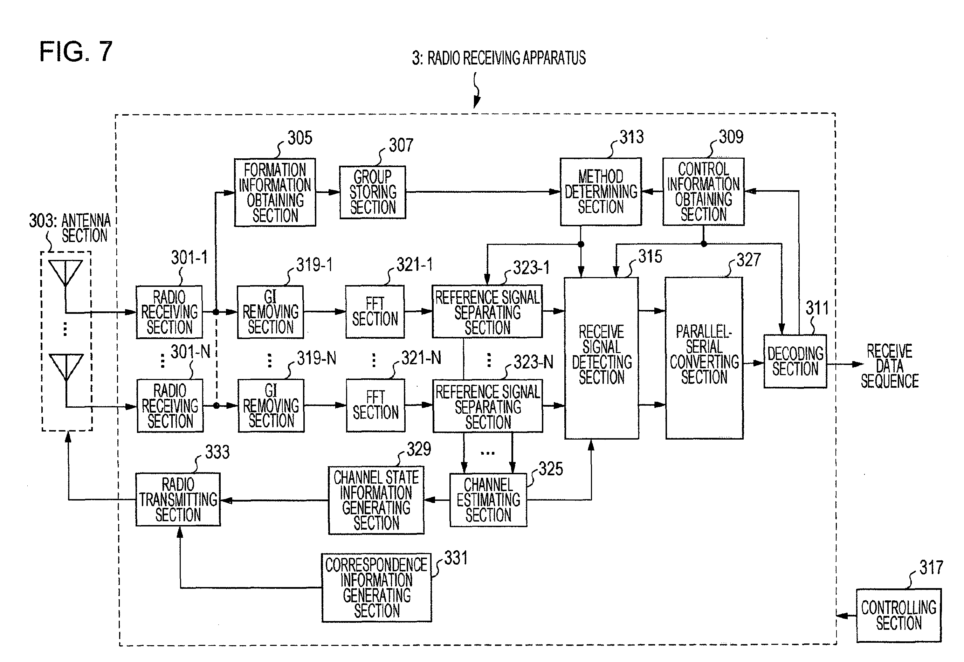

Fig. 7 is a function block diagram that illustrates a configuration example of the radio receiving apparatus 3 of the present invention. The radio receiving apparatus 3 in Fig. 7 is an example of the second kind of radio receiving apparatus 3 that corresponds to both of the multi-user MIMO transmission and the OFDMA transmission and includes the N antennas. The radio receiving section 301-1 to 301-N receive signals from the radio transmitting apparatus 1 through an antenna section 303. A formation information obtaining section 305 obtains the group formation information that is notified from the radio transmitting apparatus 1 from a receive signal that is received by at least one of the radio receiving section 301-1 to 301-N and outputs the group formation information to a group storing section 307. The group storing section 307 stores the group formation information that is obtained by the formation information obtaining section 305. The control information sequences that are output from a decoding section 311 are input to a control information obtaining section 309. The control information obtaining section 309 obtains the group identification information (group ID) that is notified from the radio transmitting apparatus 1 and outputs the group identification information to a method determining section 313. Further, when information of the MCSs are contained in the control information sequences, the control information obtaining section 309 outputs MCS information to a receive signal detecting section 315 and the decoding section 311.

The method determining section 313 refers to the group formation information that is stored in the group storing section 307 and determines whether or not the own radio receiving apparatus 3 (own station) belongs to the group that is represented by the group ID obtained by the control information obtaining section 309, notifies a controlling section 317 of a result of the determination, and executes a data receiving operation through the controlling section 317 in a case where the own station belongs to the concerned group. Further, a determination is made whether the group that is represented by the obtained group ID is the group that performs the multi-user MIMO transmission as the user multiplexing method or the group that performs the OFDMA transmission, and determines a processing order of the own station in the group, and outputs a result of the method determination to the receive signal detecting section 315.

GI removing sections 319-1 to 319-N remove the guard intervals (GI) of the signals that are received through the N antennas. FFT section 321-1 to 321-N performs time-frequency conversion on the receive signals whose GIs are removed by the fast Fourier transform (FFT) or the like and convert the receive signals into receive signal sequences of the sub-carriers for each of the antennas. Reference signal separating sections 323-1 to 323-N separate the receive signal sequences that are output from the FFT sections 321-1 to 321-N into receive signal sequences of the control information and receive data and receive signal sequences of the first reference signal and the second reference signal and input the receive signal sequences of the control information and the receive data to the receive signal detecting section 315 and the receive signal sequences of the first reference signal and the second reference signal to a channel estimating section 325.

The channel estimating section 325 estimates the channel states (the complex channel gains) between the radio transmitting apparatus 1 and the antennas of the antenna section 303 of the radio receiving apparatuses 3 and channel qualities that are indicated by the SNR or the SINR with respect to the streams that are transmitted from the radio transmitting apparatus 1 based on the separated receive signal sequences of the first reference signal and the second reference signal. When the number of the transmitted streams is equal to the number of the antennas of the radio transmitting apparatus 1, the above channel states are usually channel states between the antennas of the radio transmitting apparatus 1 and the antennas of the radio receiving apparatuses 3.

The receive signal detecting section 315 applies a signal detecting process to the receive signal sequences of the control information and the receive data based on an estimation result of the channel states by the channel estimating section 325, a determination result of the user multiplexing method, and the processing order of the own station that are obtained by the method determining section 313, obtains a receive determination value sequence of each of the spatial streams, and outputs the receive determination value sequences. The receive determination value sequence is preferably hard decision values or soft decision values to the bits of the control information and the receive data. Further, when the MCS information is input from the control information obtaining section 309, the signal detecting process in accordance with the MCS is performed. The receive signal detecting section 315 will be described later in detail.

A parallel-serial converting section 327 applies parallel-serial conversion to the receive determination value sequences of the respective spatial streams that are output from the receive signal detecting section 315 to make the receive determination value sequences a single receive determination value sequence. The decoding section 311 performs an error correction decoding process on the receive determination value sequence and generates and outputs a control information sequence and a receive data sequence. Further, when the MCS information is input from the control information obtaining section 309, rate matching (depuncturing) is performed in accordance with a coding rate of the MCS. The channel state information generating section 329 generates the SNR, SINR, CNR, and CINR or the channel quality indicator (CQI) that indicates a value calculated from those and the channel state information (CSI) that indicates the complex channel gains between the radio transmitting apparatus 1 and the receive antennas of the radio receiving apparatuses 3 with respect to the streams that are transmitted from the radio transmitting apparatus 1, a covariance value of the complex channel gains, or the like.

A correspondence information generating section 331 generates correspondence information that indicates information of the user multiplexing methods to which the own station corresponds or information which allows distinction of the corresponding user multiplexing methods (receiving function information or the like that indicates a terminal class, compliance standard information, and so forth) in a case where communication is established with radio transmitting apparatus 1 for the first time, a case where grouping is updated, or the like. A radio transmitting section 333 transmits the channel state information that is generated by the channel state information generating section 329 and the correspondence information that is generated by the correspondence information generating section 331 to the radio transmitting apparatus 1 through the antenna section 303. The controlling section 317 controls each of the above sections and makes the sections execute their processes.

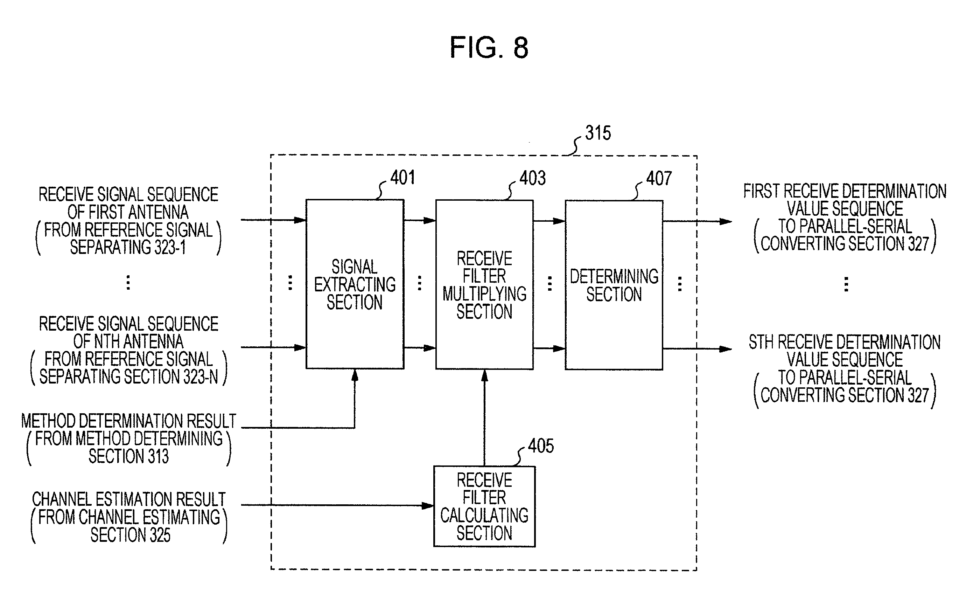

Fig. 8 is a function block diagram that illustrates a configuration example of the receive signal detecting section 315 of the present invention. The receive signal detecting section 315 has a signal extracting section 401, a receive filter multiplying section 403, a receive filter calculating section 405, and a determining section 407. The signal extracting section 401 extracts the receive signal sequence of the sub-carrier (block) that is allocated to the own station based on the result of the method determination by the method determining section 313. That is, the receive signal sequences of all the sub-carriers are extracted in a case where the user multiplexing method is the multi-user MIMO, and only the receive signal sequence of the sub-carrier (block) that is allocated to the own station is extracted in a case where the user multiplexing method is the OFDMA. When the allocation that is illustrated in Fig. 6B is performed, the receive signal sequences of all the sub-carriers are extracted with respect to the receive signal sequences of the control information that is common to all the users.

Fig. 8 illustrates an example where the number of the spatial streams that are addressed to the own station is a number S. A description will be made below with an example. where S = 1 in a case where the user multiplexing method is the multi-user MIMO and with an example where S is equal to an antenna number N of the antenna section 303 (S = N) in a case where the user multiplexing method is the OFDMA. Further, N is equal to the number M of the antennas of the radio transmitting apparatus 1.

The receive filter calculating section 405 calculates a receive filter Wᵣ for detecting the spatial streams that are addressed to the own station from the receive signal sequence of each of the antennas that is extracted by the signal extracting section 401 based on a channel estimation result by the channel estimating section 325. For example, when the multi-user MIMO is used and interferences among the users are reduced in the transmitting process in the radio transmitting apparatus 1, the receive filter Wᵣ may be one (or an identity matrix I). Further, for example, when the single-user MIMO transmission is performed in a case of the OFDMA, the channel estimating section 325 calculates, as the channel estimation result, a channel matrix Hᵣ that has the complex channel gains between the N receive antennas of the radio receiving apparatuses 3 and the M transmit antennas of the own radio transmitting apparatus 1 as components and calculates a filter that reduces interferences among the receive antennas (streams) to separate and detect the streams such as a zero forcing criterion Wᵣ = Hᵣ⁻¹ or an MMSE criterion Wᵣ = Hᵣ^{H} (HᵣHᵣ^{H} + αI)⁻¹ as the receive filter Wᵣ.

The receive filter multiplying section 403 multiplies the receive signal sequences that are extracted by the signal extracting section 401 by the receive filter that is calculated by the receive filter calculating section 405 and calculates receive symbol sequences of first to a maximum of Sth spatial streams that are common to all the users and addressed to the own station. The determining section 407 performs soft decisions or hard decisions on the bits with respect to the receive symbol sequences of the spatial streams and calculates the receive determination value sequences of the spatial streams.

The receive signal detection by the receive signal detecting section 315 may be performed by using a maximum likelihood detection (MLD), a complexity-reduced MLD with QR decomposition and M-algorithm (QRM-MLD) that is a method derived from the MLD, or the like instead of the method by multiplication by the receive filter in the example in Fig. 8.

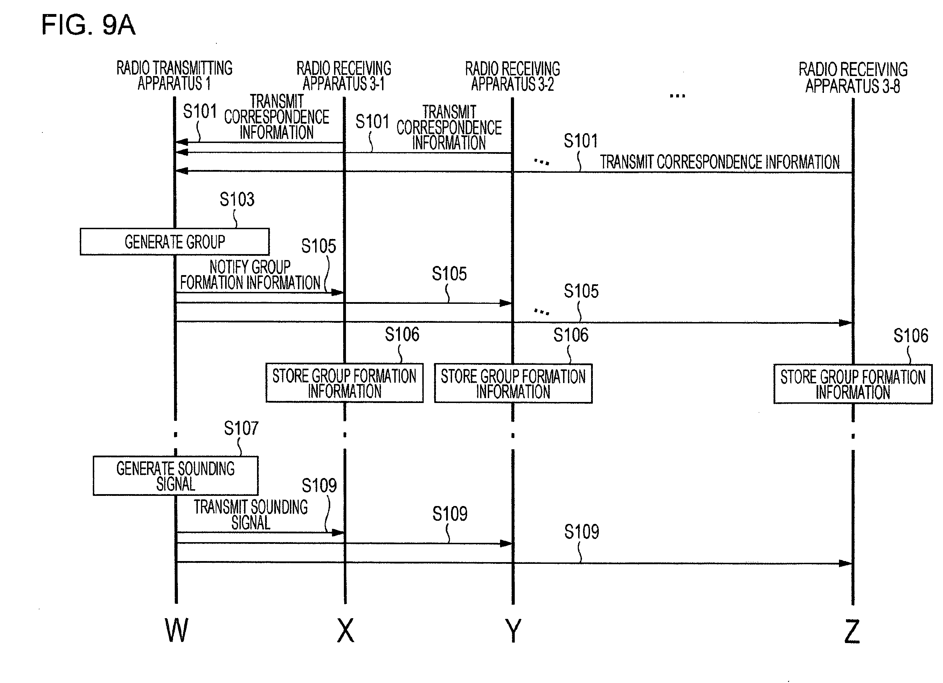

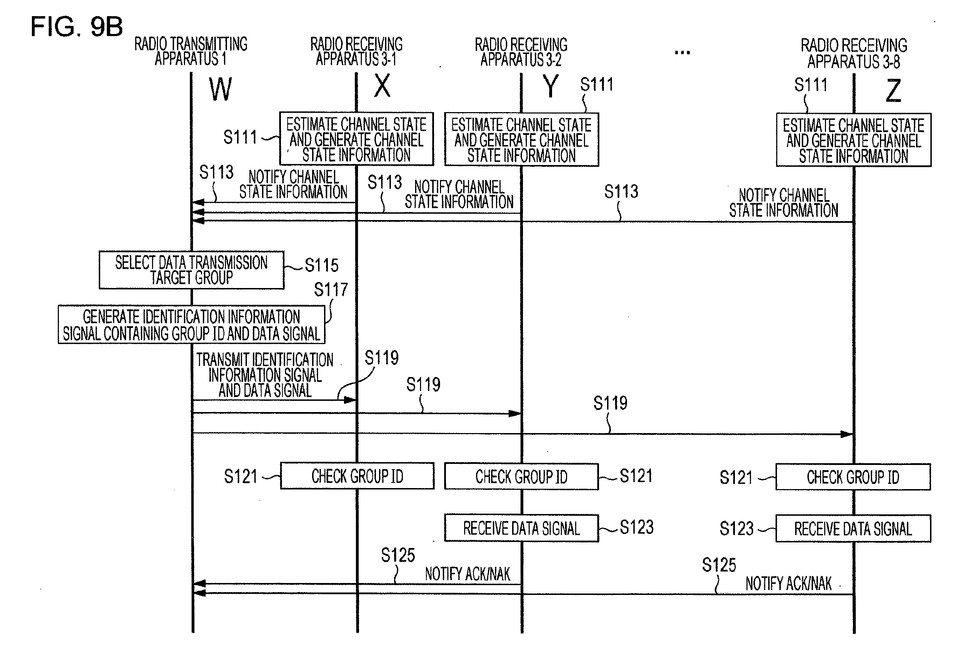

Figs. 9A and 9B illustrate examples of sequence charts that illustrate operations between the radio transmitting apparatus 1 and the radio receiving apparatuses 3 of the present invention. In Figs. 9A and 9B, the radio receiving apparatuses 3-1, 3-2, and 3-8 are selected and illustrated as representatives of the radio receiving apparatuses 3. First, the radio receiving apparatuses 3 transmit the correspondence information that indicates information of the user multiplexing methods to which the radio receiving apparatuses 3 correspond or information which allows distinction of the corresponding user multiplexing methods (receiving function information or the like that indicates a terminal class, compliance standard information, and so forth) to the radio transmitting apparatus 1 (step S101). The transmission of the correspondence information from the radio receiving apparatuses 3 may be performed at separate timings in a case where communication is established with the radio transmitting apparatus 1 for the first time, a case where a request is made by the radio transmitting apparatus 1, and so forth.

The radio transmitting apparatus 1 groups the radio receiving apparatuses 3 into a plurality of groups in which the user multiplexing methods to be used for the multi-user multiplexing transmission are determined, creates groups based on the correspondence information or the like that is notified from the radio receiving apparatuses 3 (step S103), and notifies the radio receiving apparatuses 3 of information of the groups (the group formation information) (step S105). The radio receiving apparatuses 3 store the group formation information that is notified from the radio transmitting apparatus 1 (step S106). Thereafter, the radio transmitting apparatus 1 generates the sounding signal (step S107) and transmits the sounding signal (step S109).

The radio receiving apparatuses 3 receive the sounding signal, estimate the channel states between the radio receiving apparatuses 3 and the radio transmitting apparatus 1 based on receiving states of the reference signal that is contained in the sounding signal, generate the channel state information that indicates estimation results of the channel states (step S111), and notify the radio transmitting apparatus 1 of the channel state information (step S113). Fig. 9B illustrates an example where all the radio receiving apparatuses 3 notify the channel states. However, a procedure may be performed such that the channel state information is individually notified in accordance with a successive notification instruction (polling) of the radio transmitting apparatus 1 or such that a group ID is added to the sounding signal and only the radio receiving apparatuses 3 that belong to the concerned group sequentially notify the channel state information. Thereafter, the radio transmitting apparatus 1 selects a group in which the multi-user multiplexing transmission is performed based on the channel state information that is notified from the radio receiving apparatuses 3, transmit data amounts addressed to the radio receiving apparatuses 3 and priority that are accumulated in the transmit buffer section 117, and so forth and determines a user multiplexing transmission method (step S115).

The radio transmitting apparatus 1 generates an identification information signal that contains the group ID of the selected group and a data signal in which a multiplexing process by the determined user multiplexing method with respect to the selected group is applied to the transmit data addressed to the plurality of radio receiving apparatuses 3 that belong to the selected group (step S117) and transmits the identification information signal and the data signal to the radio receiving apparatuses 3 (step S119). When the group ID is added to the sounding signal, a process from the transmission of the sounding signal to the user multiplexing transmission of the transmit data may be recognized as a set of sequences, and the group ID may not be added when a user multiplexing signal is transmitted.

The radio receiving apparatuses 3 receive the identification information signal, check the group ID that is contained in the identification information signal, and determine whether or not the own radio receiving apparatuses 3 belong to the concerned group (step S121). If the own radio receiving apparatus 3 belongs to the concerned group, the radio receiving apparatus 3 receives the data signal and performs a data receiving process such as signal detection (decoding) and error correction decoding (step S123). If no error is detected from the receive data, the radio receiving apparatus 3 notifies the radio transmitting apparatus 1 of acknowledgement (ACK). If an error is detected, the radio receiving apparatus 3 notifies negative acknowledgement (NAK or NACK) (step S125). Further, notifications of the ACK or the NAK are sequentially performed in an order of the radio receiving apparatuses 3 that is in advance determined in the concerned group.

As described above, this embodiment enables identification of whether a multi-user multiplexing transmission signal that is transmitted from the radio transmitting apparatus 1 is the multi-user MIMO or the OFDMA and enables a notification of the user multiplexing method to the radio receiving apparatus 3 without increasing a control information amount in a radio communication system in which the radio transmitting apparatus 1 selects and uses either one of the multi-user MIMO and the OFDMA as the user multiplexing method for each operation of the multi-user multiplexing transmission.

Further, with respect to the group IDs, a processing order of the belonging radio receiving apparatuses 3 are in advance determined, and an allocation rule is used in which radio resource allocation to the radio receiving apparatuses 3 (allocation of the spatial streams in the multi-user MIMO transmission and allocation of the sub-carriers or the sub-carrier blocks in the OFDMA transmission) is determined in accordance with the order. Accordingly, the allocation in the multi-user MIMO transmission and the allocation in the OFDMA transmission may be notified to the radio receiving apparatuses 3 without increasing the control information amount.

Further, in a case where the radio receiving apparatus 3 that does not recognize that the radio transmitting apparatus 1 which communicates with the radio receiving apparatus 3 corresponds to the OFDMA transmission (for example, the first kind of radio receiving apparatus 3 that is compliant to an old specification) is present, such a radio receiving apparatus 3 may receive the multi-user multiplexing transmission signal that uses the multi-user MIMO from the radio transmitting apparatus 1 only by determining whether or not the own radio receiving apparatus 3 (the own station) belongs to the group that is indicated by the group ID, without adding a particular process.

A program that operates in a communication apparatus according to the present invention may be a program that controls a central processing unit (CPU) or the like (a program that allows a computer to function) so that a function of the above embodiment related to the present invention is realized. In addition, information that is dealt with by such apparatuses is temporarily accumulated in a random access memory (RAM) during a process of the information, thereafter stored in various kinds of read only memories (ROM) such as flash ROMs or hard disk drives (HDD). The information is read out, corrected, and written by the CPU as appropriate. Further, a program for realizing functions of the configurations in Fig. 2 and so forth is recorded in a computer-readable record medium, the program that is recorded in the record medium is read and executed by the computer, and a process of each section may thereby be performed. It should be noted that a "computer system" herein includes an OS and hardware such as peripheral devices.

Further, "computer-readable record media" are portable media such as flexible disks, magneto-optical disks, ROMs, and CD-ROMs and storage devices such as hard disks that are built in the computer system. In addition, the "computer-readable record media" include elements that dynamically retain the program for a short period of time like communication wires in a case where the program is transmitted via a communication line such as a network like the internet and a telephone line and elements that retain the program for a certain period such as volatile memories in the computer systems that are servers or clients in the above case. Further, the program may realize a portion of the above-described functions and may be realized in combination with a program where the above-described functions are already recorded in the computer system. Further, a portion or the whole of the communication apparatus in the above-described embodiment (the radio transmitting apparatus 1 and the radio receiving apparatuses 3) may typically be realized as an LSI that is an integrated circuit. Function blocks of the communication apparatus may individually be formed into chips, or a portion or all of those may be integrated into a chip. Further, a method of forming the integrated circuit is not limited to an LSI, but the integrated circuit may be realized as a dedicated circuit or a general purpose processor. Further, when a technology of forming an integrated circuit that replaces the LSI emerges as a result of progress of a semiconductor technology, an integrated circuit by the technology may be used.

The embodiment of the present invention has been described with reference to the drawings in the foregoing. However, a specific configuration is not limited to those embodiments, and the present invention includes inventions with modifications within a scope that does not depart from the gist of the present invention. The present invention is applicable to a communication apparatus.

### Reference Signs List

- 1: radio transmitting apparatus
- 3, 3-1 to 3-8: radio receiving apparatus
- 101: radio receiving section
- 103: antenna section
- 105: correspondence information obtaining section
- 107: group forming section
- 109: group storing section
- 111: formation information generating section
- 113: channel state information obtaining section
- 115: scheduling section
- 117: transmit buffer section
- 119: control information generating section
- 121: coding section
- 123: modulating section
- 125: transmit symbol generating section
- 127, 127-1 to 127-M: IFFT section
- 129, 129-1 to 129-M: GI inserting section
- 131, 131-1 to 131-M: radio transmitting section
- 133: controlling section
- 201: mapping section
- 203: transmit filter multiplying section
- 205: reference signal generating section
- 207: transmit filter calculating section
- 301, 301-1 to 301-N: radio receiving section
- 303: antenna section
- 305: formation information obtaining section
- 307: group storing section
- 309: control information obtaining section
- 311: decoding section
- 313: method determining section
- 315: receive signal detecting section
- 317: controlling section
- 319, 319-1 to 319-N: GI removing section
- 321, 321-1 to 321-N: FFT section
- 323, 323-1 to 323-N: reference signal separating section
- 325: channel estimating section
- 327: parallel-serial converting section
- 329: channel state information generating section
- 331: correspondence information generating section
- 333: radio transmitting section
- 401: signal extracting section
- 403: receive filter multiplying section
- 405: receive filter calculating section
- 407: determining section

## Claims

1. A radio transmitting apparatus that includes a plurality of transmit antennas, selects one of a plurality of multiplexing methods, and multiplexes and simultaneously transmits transmit data that are addressed to a plurality of radio receiving apparatuses, the radio transmitting apparatus comprising:
a group forming section that creates a plurality of groups that are formed with the plurality of radio receiving apparatuses based on information that indicates the multiplexing methods to which the radio receiving apparatuses correspond, determines the multiplexing methods that multiplex data to be transmitted to the plurality of radio receiving apparatuses that belong to the groups with respect to the respective groups, selects one of candidates of identification numbers that are in advance determined corresponding to the multiplexing methods, and adds the selected candidates of the identification numbers to the groups;
a scheduling section that selects any one group from the groups; and
a transmit symbol generating section that generates a transmit signal by multiplexing data to be transmitted to the plurality of radio receiving apparatuses that belong to the selected group by the multiplexing method that corresponds to the identification number that is added to the selected group.

2. The radio transmitting apparatus according to claim 1, comprising:
a group storing section that stores the created groups;
a formation information generating section that generates group formation information of the groups; and
a control information generating section that generates control information that contains the identification number of the selected group; wherein
the group formation information is transmitted to the radio receiving apparatuses, and the control information and the transmit signal in which the data to be transmitted to the plurality of radio receiving apparatuses are multiplexed are transmitted to the radio receiving apparatuses that belong to the selected group.

3. The radio transmitting apparatus according to claim 2, wherein
the group forming section determines orders in the groups of the radio receiving apparatuses that belong to the groups,
the formation information generating section generates group formation information that contains information that indicates the orders of the radio receiving apparatuses in the groups, and
the scheduling section determines radio resource allocation to the radio receiving apparatuses based on the order of the radio receiving apparatuses that belong to the selected group.

4. The radio transmitting apparatus according to claim 3, wherein
one of the plurality of multiplexing methods is orthogonal frequency division multiple access (OFDMA) that multiplexes the radio receiving apparatuses in a frequency direction, and
the scheduling section determines sub-carrier allocation to the radio receiving apparatuses based on the order of the radio receiving apparatuses that belong to the selected group in a case where the multiplexing method that corresponds to the identification number added to the selected group is the OFDMA.

5. The radio transmitting apparatus according to claims 1 to 4, wherein
the plurality of multiplexing methods are multi-user multiple-input multiple-output (MIMO) that multiplexes the radio receiving apparatuses in a spatial direction and the orthogonal frequency division multiple access (OFDMA) that multiplexes the radio receiving apparatuses in the frequency direction.

6. A radio receiving apparatus that receives a signal in which transmit data addressed to a plurality of radio receiving apparatuses are multiplexed and which is simultaneously transmitted from a radio transmitting apparatus that includes a plurality of transmit antennas, the radio receiving apparatus comprising:
a control information obtaining section that obtains control information that contains an identification number of a group from the received signal;
a method determining section that determines whether or not the own apparatus belongs to the group that corresponds to the identification number; and
a receive signal detecting section that performs a receiving process in response to the multiplexing method that is in advance determined corresponding to the identification number in a case where the own apparatus belongs to the group as a result of the determination.

7. The radio receiving apparatus according to claim 6, further comprising:
a formation information obtaining section that obtains group formation information of a group to which the radio receiving apparatus that is a transmission destination of the radio transmitting apparatus belongs; and
a group storing section that stores information of the group.

8. The radio receiving apparatus according to claims 6 or 7, wherein
the multiplexing method is either one of multi-user multiple-input multiple-output (MIMO) that multiplexes the radio receiving apparatuses in a spatial direction and orthogonal frequency division multiple access (OFDMA) that multiplexes the radio receiving apparatuses in a frequency direction.

9. The radio receiving apparatus according to claims 6 to 8, wherein
the receive signal detecting section identifies a radio resource allocation position with respect to the own apparatus based on an order of the own apparatus in the group and extracts the receive signal that is addressed to the own apparatus.

10. A radio communication system comprising:
the radio transmitting apparatus according to any of claims 1 to 5; and
the radio receiving apparatus according to any of claims 6 to 9.

11. An integrated circuit, which is implemented in a radio transmitting apparatus that includes a plurality of transmit antennas to allow the radio transmitting apparatus to execute a plurality of functions, wherein
the plurality of functions includes
a function of selecting one of a plurality of multiplexing methods, multiplexing transmit data that are addressed to a plurality of radio receiving apparatuses, and simultaneously transmitting the transmit data,
a function of creating a plurality of groups that are formed with the plurality of radio receiving apparatuses based on information that indicates multiplexing methods to which the radio receiving apparatuses correspond, determining the multiplexing methods that multiplex data to be transmitted to the plurality of radio receiving apparatuses that belong to the groups with respect to the respective groups, selecting one of candidates of identification numbers that are in advance determined corresponding to the multiplexing methods, and adding the selected candidates of the identification numbers to the groups,
a function of selecting any one group from the groups, and a function of generating a transmit signal by multiplexing data to be transmitted to the plurality of radio receiving apparatuses that belong to the selected group by the multiplexing method that corresponds to the identification number that is added to the selected group.

12. An integrated circuit, which is implemented in a radio receiving apparatus to allow the radio receiving apparatus to execute a plurality of functions, wherein
the plurality of functions includes
a function of receiving a signal in which transmit data addressed to a plurality of radio receiving apparatuses are multiplexed and which is simultaneously transmitted from a radio transmitting apparatus that includes a plurality of transmit antennas,
a function of obtaining control information that contains an identification number of a group from the received signal,
a function of determining whether or not the own apparatus belongs to the group that corresponds to the identification number, and
a function of performing a receiving process in response to the multiplexing method that is in advance determined corresponding to the identification number in a case where the own apparatus belongs to the group as a result of the determination.
